# EUROPEAN PATENT APPLICATION

(11) **EP 4 712 219 A1**
(43) Date of publication of application: **18.03.2026**
(21) Application number: 24200009.9
(22) Date of filing: 12.09.2024
(51) Int. Cl.: H01M 50/105, H01M 50/129, H01M 50/178

(54) **BATTERY AND METHOD FOR MANUFACTURING THE BATTERY**

(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

A battery, comprising: battery components including an electrode assembly; an inflatable pouch case enclosing the battery components inside, the inflatable pouch case having an inner surface facing the battery components and an outer surface opposite to the inner surface; and electrode leads electrically connected to the electrode assembly and extending through the inflatable pouch case from the inside of the inflatable pouch case to an outside of the inflatable pouch case; the battery being characterized in that the outer surface of the inflatable pouch case is sealingly bonded to a surface of each of the electrode leads.

## Description

### TECHNICAL FIELD

The present subject relates to a battery, in particular a pouch battery and a method for manufacturing the battery.

### BACKGROUND

Pouch batteries usually include an electrode assembly comprising at least one anode and one corresponding cathode. The cathode is coated with an active battery material that is generally configured to hold lithium ions, such as an LCO or LMO containing material and the anode is coated with active battery material configured to receive and store lithium ions such as a graphite containing material. The coated anode and the coated cathode are stacked upon each other and separated by a separator layer. Furthermore, pouch batteries comprise a pouch case made of an inflatable material, which envelops the electrode assembly, the separator as well as the electrolyte, wherein the remaining space inside the pouch case is filled with an electrolyte. The electrode assembly, the separator as well as the electrolyte may also be called battery components.

To charge or discharge the battery, the cathode and the anode are electrically coupled to electrode leads that protrude from the pouch case. The electrode leads are usually made of conductive material such as a metal material which is covered with a lead film, i.e. an electrically insulating material to insulate the metal. The ends of the electrode leads may protrude from the pouch case on opposite sides of the pouch case or in some examples on the same side. Each of the electrode leads electrically contacts a corresponding anode or cathode and extends from the inside of the pouch case through the pouch case to an outside of the pouch case. Therefore, the pouch case comprises through holes allowing the electrode leads to extend through the pouch case. At the through holes, an inner surface the pouch case facing the battery components is sealed with respect to electrode leads to avoid leakage of the electrolyte inside the pouch case. Therefore, the pouch case is in sealing contact with a surface of the electrode leads. The sealing contact is usually realized by attaching the inner surface of the pouch case to the surface of the electrode leads, for example via bonding.

Nevertheless, it is found that the sealing of the pouch case with respect to the electrode leads is not very reliable. In some cases, the connection of the pouch case to the electrode leads becomes leaky or may even release from the electrode leads. For example, in such cases the electrolyte inside the pouch case may escape from the pouch case or particles from the outside may reach the inside of the pouch battery. Thus, a better sealing of the pouch case is needed.

### DETAILED DESCRIPTION OF THE INVENTION

### TECHNICAL PROBLEM

It is thus an object of the present disclosure to improve the sealing of the pouch case.

However, the problem to be solved by the embodiments of the present disclosure is not limited to the above-described problem and can be variously expanded within the scope of the technical idea included in the present disclosure.

### TECHNICAL SOLUTION

The objective is solved by the claimed battery and the claimed method for manufacture thereof as well as the claimed system for manufacturing the battery.

In particular, the above objective is solved by a battery, comprising: battery components including an electrode assembly; an inflatable pouch case enclosing the battery components inside, the inflatable pouch case having an inner surface facing the battery components and an outer surface opposite to the inner surface; and electrode leads electrically connected to the electrode assembly and extending through the inflatable pouch case from the inside of the inflatable pouch case to an outside of the inflatable pouch case. The outer surface of the inflatable pouch case is sealingly bonded to a surface of each of the electrode leads.

Battery components may for example comprise the electrode assembly, the separator and the electrolyte. A battery component may for example be the electrode assembly, the separator or the electrolyte. The electrode assembly may comprise the anode and the cathode. The anode may comprise a metal electrode that is coated with an active anode material. The cathode may comprise a metal electrode that is coated with an active cathode material. The electrode leads electrically connect the electrode assembly. Each electrode lead electrically contacts a respective electrode such as an anode of cathode. An electrode lead is usually made of a core conductive metal material which may be covered and surrounded with an insulator to electrically insulate the core conductive material from the outside. The electrode leads may be used to electrically charge or discharge the battery.

The pouch case can be a bag that includes the battery components inside. The battery may be a pouch battery or a pouch battery cell. The pouch case may be made of an elastic material such that it is capable to swell under the influence of a gas evolving inside the pouch case. In this context, inflatable means that the pouch case is capable of expanding under the influence of a gas evolving inside the battery. The pouch case may be made of single film or multilayer structure. The multilayers may be laminated together. The inner surface and the outer surface limit the single film or the multilayer structure on opposing sides. The inner surface may face an inside of the battery. The outer surface may face an outside of the battery. The inner surface and the outer surface may face in opposite directions. The inner surface and the outer surface may be parallel or substantially parallel with respect to each other. The inner surface and the outer surface may sandwich the single film or the multilayer structure in between. The pouch case may be made of a layered structure containing a polyethylene terephthalate layer, a Nylon layer, an aluminium containing layer, and polyolefin resin layer that are stacked above each other, wherein the polyethylene terephthalate layer constitutes the outer surface, and the polyolefin resin layer constitutes the inner surface. The pouch case protects and seals the battery components in the inside of the pouch case.

The pouch case may comprise one or more through holes, through which the electrode leads extend from the inside of the pouch. In this manner the electrode leads may extend through the pouch case. The pouch case may be sealed with respect to the electrode leads at the through holes. In order to seal the pouch case with respect to the electrode leads, the pouch case is in sealing contact with an outer surface of an electrode lead. The sealing contact prevents the electrolyte from penetrating from the inside of the battery to the outside of the battery. A sealing contact is realized by bonding the pouch case to the outer surface of an electrode lead. A sealing contact may thus be called a sealing bond.

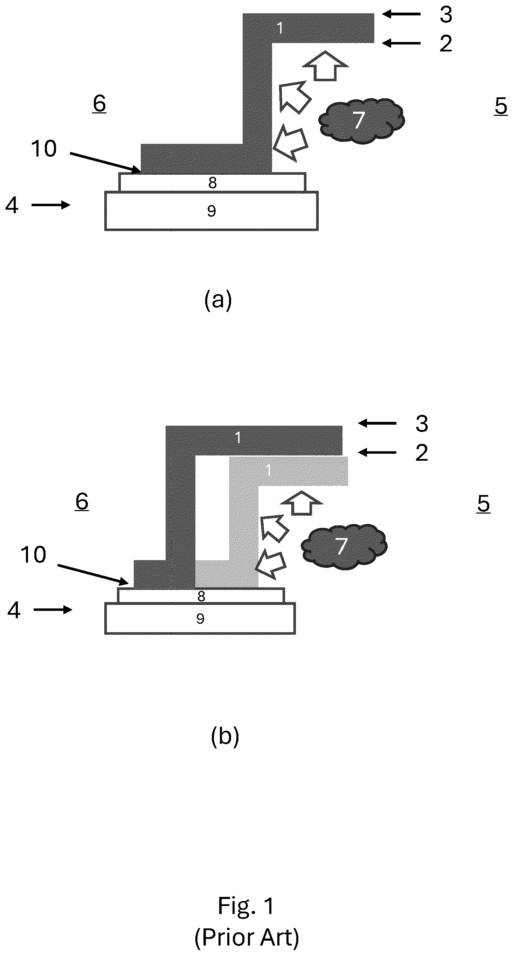

The inventors found that one reason for deteriorated sealing of the pouch case with respect to the electrode leads is caused by the so-called battery swelling. During operation in terms of charging and discharging of the battery gas mainly originating from the active materials of the electrode assembly may form inside the pouch case. The gas increases the pressure inside the pouch case such that the pouch case swells. Due to the swelling of the pouch case the sealing contact of the pouch case to the electrode leads may be deteriorated as for example shown in and described in the context of Fig. 1 below. The swelling results in a tension of the pouch case that acts upon the sealing connection of inner surface of the pouch case to the electrode leads. In other words, the tension of pouch case may result in a pulling force inducted by the pouch case acting upon the connection of the pouch case to the electrode leads. This may loosen the connection between the inner surface of the pouch case and the electrode lead. Hence, the traction of the pouch case may reduce the connecting interface between the pouch case and the surface of the electrode lead. In the worst case, the pouch case may release from the electrode leads such that the connection of the pouch case to the electrode leads becomes leaky.

In this view, the inventors suggest instead of contacting the inner surface of the pouch case to the surface of the electrode leads to sealingly bond the outer surface of the pouch case to the electrode leads. This involves a bending of the inflatable pouch case which leads to an increase of the available volume inside the pouch case. Thus, when a gas inside the pouch case evolves and battery swelling occurs, there is more space available inside the pouch case that may take up the gas. Thus, the probability that the pouch case tenses and induces a force that acts upon the sealing connection is reduced. Therefore, during conventional operation of the battery the wear out of the connection, i.e. the bonding, between the pouch case and the electrode leads is reduced and the sealing of the pouch case to the electrode is improved.

In the following further advantageous aspects of the invention will be given.

In some aspects, the inflatable pouch case is folded such that the outer surface of the inflatable pouch case is in contact with the surface of each of the one or more electrode leads. The folding induces the above bending while keeping the extension of the folded pouch case low. Hence, the claimed battery may show the positive effects of an improved sealing connection while keeping a low extension. As compared to bending, folding leads to a sharper transition. The folded pouch case may thus have a defined folding edge.

In some further aspects, the inflatable pouch case has a U-shaped portion such that the outer surface of the inflatable pouch case is in contact with the surface of each of the one or more electrode leads. The U-shaped portion of the pouch case, when expanded, may provide for additional space inside the pouch case that can take up evolving gas.

In some further aspects, in the U-shaped portion one part of the inner surface faces another part of the inner surface. Thus, an additional space is provided in between the one part of the inner surface and the opposing other part of the inner surface. When the pouch case expands under the influence of a gas pressure this additional space may take up the evolving gas.

In some aspects, the electrode leads each comprise an insulating film constituting the surface of each of the one or more electrode leads. Hence, the conductive material, such as a metal of an electrode lead is electrically insulated, in particular with respect to the pouch case. The insulating film is preferably selected from any one of polyimide, polypropylene, polyethylene, polyethylene terephthalate, polyvinyl chloride, and/or high-density polyethylene. These materials have been found to provide sufficient insulating characteristics while being capable to melt under the influence of heat so as to realize a sealing contact to the material that constitutes the inner surface of a pouch case.

In some aspects, the inflatable pouch case comprises a first polymer layer that constitutes the outer surface of the inflatable pouch case, wherein the first polymer layer is preferably made of nylon resin or polyethylene terephthalate. The first polymer layer is the outermost layer of the pouch case and serves to protect the battery from external friction and impact, while electrically insulating the battery and the battery components from the outside. Here, the outermost layer refers to the direction facing outward, opposite to the direction where the electrode assembly is located. Polymers like nylon resin or polyethylene terephthalate (PET), may have a wear resistance and heat resistance, while still being able to form a connection to the outer surface of the electrode leads under the influence of heat and pressure. The first polymer layer can have a single-layer structure made of one material or a composite film structure formed by two or more materials forming the first polymer layer.

In some aspects, the inflatable pouch case comprises a second polymer layer that constitutes the inner surface of the inflatable pouch case, wherein the second polymer layer is preferably made of polyolefin resin such as polypropylene or polyethylene. Polyolefin resins such as polypropylene or polyethylene have excellent mechanical properties such as tensile strength, rigidity, surface hardness, wear resistance, and heat resistance, as well as its chemical properties like corrosion resistance. Moreover, the second polymer layer may be composed of coated polypropylene or polypropylene-butylene-ethylene terpolymer. Additionally, the second polymer layer can have a single-layer structure made of one material or a composite film structure formed by two or more materials forming the second polymer layer.

Moreover, the above objective is solved by a method for manufacturing a battery, the method comprising: Enclosing battery components including an electrode assembly inside an inflatable pouch case, wherein the inflatable pouch case has an inner surface facing the battery components and an outer surface opposite to the inner surface, and wherein electrode leads electrically connected to the electrode assembly extend through the inflatable pouch case from an inside of the inflatable pouch case to an outside of the inflatable pouch case. The method is particularly characterized by bonding the outer surface of the inflatable pouch case to a surface of each of the electrode leads of the inflatable pouch case. In this manner, the above-described battery can be manufactured that shows improved sealing characteristics.

In some aspects, bonding the outer surface of the inflatable pouch case to a surface of each of the electrode leads comprises: heating the outer surface of the inflatable pouch case and the surfaces of the electrode leads; and pressing the heated outer surface of the inflatable pouch case against the heated surfaces of the electrode leads. Due to the heating the materials of the outer surface and of the surfaces of the electrode leads can be at least partly molten. By pressing the at least partly molten materials of said surfaces against each other a rigid and sealing connection of the pouch case to the electrode leads may be established.

In some aspects, bonding the outer surface of the inflatable pouch case to a surface of each of the electrode leads further comprises: bending, in particular folding, the inflatable pouch case such that the outer surface of the inflatable pouch case faces the surface of at least one of the electrode leads; placing a heat source between the outer surface of the inflatable pouch case and the surface of the electrode lead; and pressing the bent pouch case against the electrode leads such that the outer surface of the inflatable pouch case is bonded to the surface of the electrode lead. In this manner, the outer surface of the inflatable pouch case can be time efficiently bonded to the surface of the electrode leads. Also, it can be avoided that the heated surfaces cool before the pressing action, which may deteriorate the connection.

In some aspects, the heating is performed by applying electromagnetic waves, in particular infrared light. The application of electromagnetic waves is easy to implement since it does not require a direct connection. Furthermore, applying electromagnetic waves for the heating may be spatially focused on selected areas, without heating further components of the battery.

In some aspect, the pressing is performed for about 2-3 seconds. The pressing time has been found a considerable parameter to influence the quality of the connection via bonding. In said range a high quality of the connection can be realized.

Furthermore, the above objective is solved by a battery manufacturing system being configured to perform the steps of the previous method for fabrication of a battery. Such manufacturing system is capable of manufacturing the claimed battery, which solves the above objective.

### ADVANTAGEOUS EFFECTS

The claimed subjects, provide for a battery, in particular a pouch battery with improved sealing characteristics. The inventors found that the so-called battery swelling of the pouch case may deteriorate the sealing connecting of the inflatable pouch case with the electrode leads, which may induce leakage of the battery. This may be at least partly overcome by bonding the outer surface of the inflatable pouch case which increases the available space inside the inflatable pouch case that can take up gas evolving during battery swelling. Therefore, the probability that the inflatable pouch case tenses under the influence of battery swelling is reduced, which generally reduces the influence of battery swelling onto the connection between the pouch case and the electrode leads.

### BRIEF DESCRIPTION OF THE DRAWINGS

FIG. 1 (a) and (b) sketch the affection of battery swelling onto the connection of the pouch case to the electrode leads according to the prior art.
FIG. 2 (a) and (b) sketch the affection of battery swelling onto the connection of the pouch case to the electrode leads according to one specific embodiment of the present disclosure.
Fig. 3 (a), (b) and Fig. 4 (a), (b) sketch the steps of a method for manufacturing a battery according to one specific embodiment of the present disclosure.

Reference signs in the figures refer to the same entities.

### DETAILED DESCRIPTION OF THE EMBODIMENTS

Pouch batteries usually include battery components that are sealingly enveloped by an pouch case 1. The pouch case 1 can be made of an elastic material. Generally, the pouch case 1 is inflatable to take into account for battery swelling.

The battery components may comprise an electrode assembly including at least one anode and one corresponding cathode, a separator as well as an electrolyte. The cathode is usually coated with an active battery material that is generally configured to hold lithium ions, such as an LCO or LMO containing material and the anode is coated with active battery material configured to receive and store lithium ions such as a graphite containing material. The coated anode and the coated cathode are stacked upon each other and separated by a separator layer. Furthermore, pouch batteries comprise a preferably liquid electrolyte that fills the remaining space inside the pouch case 1.

Moreover, a pouch battery comprises electrode leads 4 electrically connected to the electrode assembly, i.e. to a corresponding one of the cathode and the anode, and extending through the inflatable pouch case 1 from an inside 5 of the inflatable pouch case 1 to an outside 6 of the inflatable pouch case 1.

Figure 1(a) sketches a sealing connection of the inflatable pouch case 1 to one of the electrode leads 4 according to the prior art. The electrode lead 4 extends from an inside 5 to an outside 6 of the inflatable pouch case 1. The inflatable pouch case 1 comprises an inner surface 2 that faces the electrode assembly in the inside 5 of the pouch case 1. Furthermore, the inflatable pouch case 1 comprises an outer surface 3 that faces the outside 6 of the pouch case 1. The inner surface 2 and the outer surface 3 limit the inflatable pouch case 1 on opposite sides. In other words, the inner surface 2 and the outer surface 3 constitute outer margins of the inflatable pouch case 1. In some cases, the outer surface 3 and the inner surface 2 run substantially in parallel to each other.

According to the prior art the inner surface 2 is sealingly bonded, i.e. is in sealing connection, with the surface of the electrode lead 4. The interface between the inner surface 2 of the pouch case 1 and the surface of the electrode lead 4 can be called a sealing section 10. In some cases, the electrode lead 4 comprises a lead metal 9 that is covered with an insulating film 8. In these cases, the inner surface 2 of the inflatable pouch case 1 is directly bonded to the surface of the insulating film 8.

As indicated in Figure 1 (a) and (b), during operation of the battery gas 7 may evolve in the inside 5 of the pouch case 1. The formation of gas 7 inside the pouch case 1 increases the pressure (indicated by arrows) that acts upon the pouch case 1. Hence, the pouch case 1 swells, which is generally known as battery swelling. The swelling leads to a tension of the pouch case 1. The tension of the pouch case 1 induces a pulling force acting upon the connection between the inner surface 2 of the pouch case 1 and the surface of the electrode lead 4. Hence, as shown in Figure 1 (b), the pulling force loosens the bonding, i.e. the connection, between the inner surface 2 and the surface of the electrode lead 4. Thus, the inflatable pouch case 1 rips off from the electrode lead 4 which reduces the area of the sealing section 10. In the worst case the sealing of the inflatable pouch case 1 is broken such that the electrolyte in the inside 5 of the inflatable pouch case 1 leaks out.

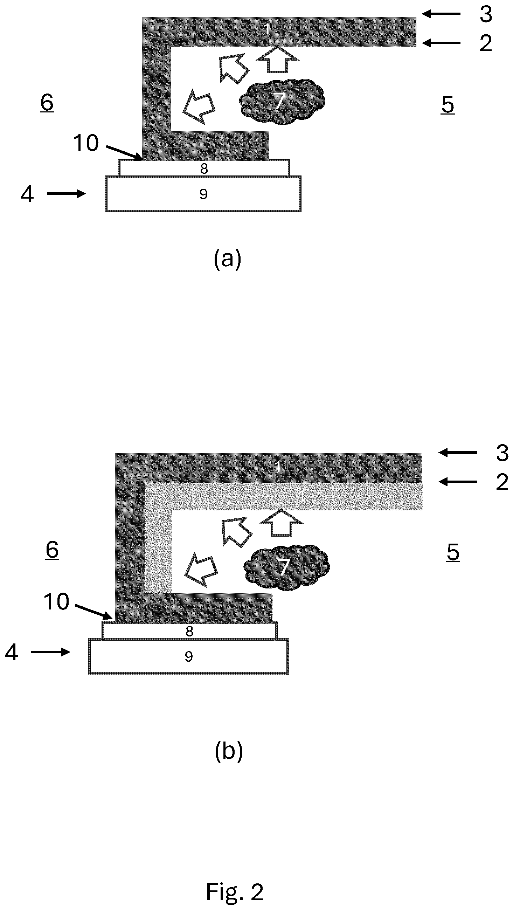

Figure 2 (a) and (b) show the connection of the inflatable pouch case 1 according to the present disclosure. The reference signs in the figures refer to the same entities as in figure 1. The disclosure shown in figure 2 is substantially based on figure 1 with a modification in the connection of the inflatable pouch case 1 to the electrode lead 4.

According to the present disclosure, the outer surface 3 of the inflatable pouch case 1 is bonded to the surface of the electrode lead 4. As be taken from Figure 2(a), the inflatable pouch case 1 is bent by about 180° such that the outer surface 3 is sealingly bonded to the surface of the electrode lead 4. In other words, the inflatable pouch case 1 may have a U-shaped portion such that the outer surface 3 contacts the surface of the electrode lead 4.

Hence, the inside 5 of inflatable pouch case 1 may have in increased volume capacity with respect the pouch case of the prior art. Thus, the battery of the present disclosure is capable of taking up in increased amount of gas 7 inside the inflatable pouch case 1 before starting to swell.

As shown in Figure 2 (b) when a gas 7 evolves in the inside 5 of the inflatable pouch case 1, the inflatable pouch case 1 can take up more gas 7 before starting to tense. Therefore, during operation of the battery, the inflatable pouch case 1 tenses less or at least fewer times as compared to the prior art. Therefore, the bonding between the inflatable pouch case 1 and the electrode lead 4 is less stressed. Thus, the sealing section 10 between the outer surface 3 and the surface of the electrode lead 4 remains intact. Thus, according to the present disclosure, the sealing of the battery is improved.

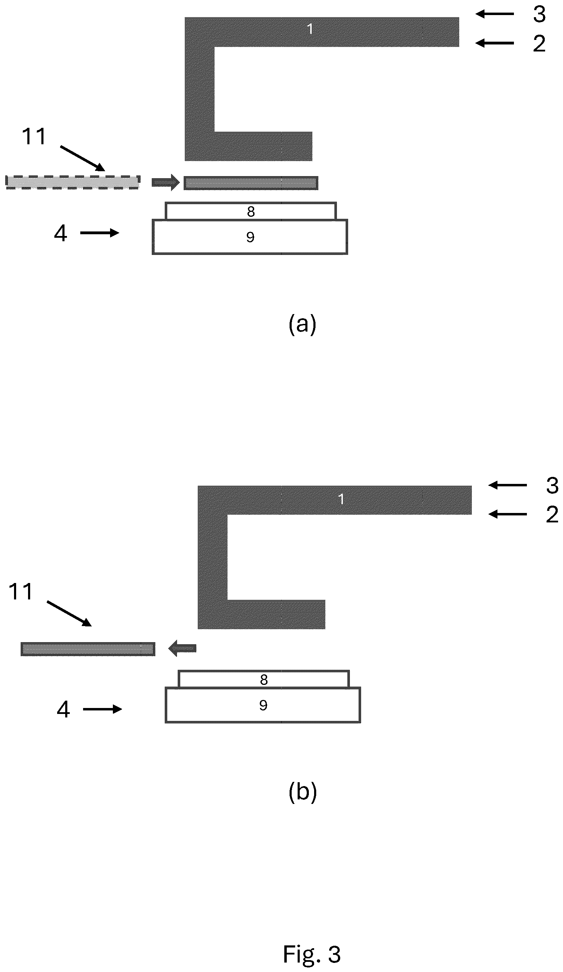

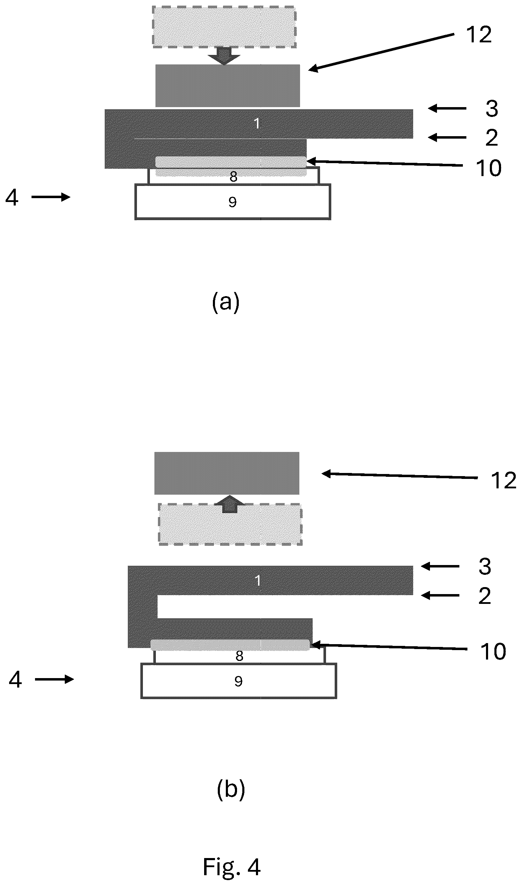

Figure 3 and figure 4 exemplary illustrates the steps of a method for manufacturing a battery according to the present disclosure.

Figure 3 (a) illustrates the first step of the method for manufacturing a battery. Accordingly, the inflatable pouch case 1 is bent such that the outer surface 3 of a portion of the inflatable pouch case 1 faces the surface of the electrode lead 4. A heat source 11 such as an infrared source is inserted in a space between the opposing outer surface 3 and the surface of the electrode lead 4. The heat source 11 may apply heat to the outer surface 3 and to the surface of the electrode lead 4, preferably simultaneously. Due to the eating of the outer surface 3 and the surface of the electrode lead 4, the materials thereof may be at least partly molten. Nevertheless, also other solutions are conceivable such as a separated heating of the portion of the outer surface 3 and the surface of the electrode lead 4, wherein the inflatable pouch case 1 is bent thereafter.

As shown in figure 3(b), the heat source 11 is removed from the space between the outer surface 3 and surface of the electrode lead 4. The heat source may be removed e.g. by lateral movement.

According to figure 4 (a), via a pressing block 12 the heated outer surface 3 is pressed against the heated surface of the electrode lead 4.

As shown in figure 4 (b) the pressure is released by withdrawing the pressing block 12. In this manner, the outer surface 3 of the inflatable pouch case 1 is sealingly bonded to the surface of the electrode lead 4. The bond constitutes a sealing connection between the outer surface 3 of the inflatable pouch case 1 and the surface of the electrode lead 4. In particular, the outer surface 3 of the inflatable pouch case is directly bonded to the surface of the electrode lead 4. In some cases, the outer surface 3 of the inflatable pouch case 1 is directly bonded to the surface of insulating film 8 covering the lead metal 9 of the electrode lead 4. Thus, a direct connection between the outer surface 3 and the surface of the electrode lead 4 is established.

### DESCRIPTION OF REFERENCE NUMERALS

- 1: pouch case
- 2: inner surface
- 3: outer surface
- 4: electrode lead
- 5: inside
- 6: outside
- 7: gas
- 8: insulating film
- 9: metal
- 10: sealing section
- 11: heat source
- 12: pressing block

## Claims

1. A battery, comprising:
battery components including an electrode assembly;
an inflatable pouch case (1) enclosing the battery components inside (5), the inflatable pouch case (1) having an inner surface (2) facing the battery components and an outer surface (3) opposite to the inner surface (2); and
electrode leads (4) electrically connected to the electrode assembly and extending through the inflatable pouch case (1) from the inside (5) of the inflatable pouch case (1) to an outside (5) of the inflatable pouch case (1);
the battery being **characterized in that**
the outer surface (3) of the inflatable pouch case (1) is sealingly bonded to a surface of each of the electrode leads (4).

2. The battery according to claim 1, wherein the inflatable pouch case (1) is folded such that the outer surface (3) of the inflatable pouch case (1) is in contact with the surface of each of the one or more electrode leads (4).

3. The battery according to any one of the preceding claims, wherein the inflatable pouch case (1) has a U-shaped portion such that the outer surface (3) of the inflatable pouch case (1) is in contact with the surface of each of the electrode leads (4).

4. The battery according to claim 3, wherein in the U-shaped portion one part of the inner surface (2) faces another part of the inner surface (2).

5. The battery according to any one of the preceding claims, wherein the electrode leads (4) each comprise an insulating film (8) constituting the surface of each of the one or more electrode leads (4), wherein the insulating film (8) is preferably selected from any one of polyimide, polypropylene, polyethylene, polyethylene terephthalate, polyvinyl chloride, and/or high-density polyethylene.

6. The battery according to any one of the preceding claims, wherein inflatable pouch case (1) comprises a first polymer layer that constitutes the outer surface (3) of the inflatable pouch case (1), wherein the first polymer layer is preferably made of nylon resin or polyethylene terephthalate.

7. The battery according to any one of the preceding claims, wherein the inflatable pouch case (1) comprises a second polymer layer that constitutes the inner surface (2) of the inflatable pouch case (1), wherein the second polymer layer is preferably made of polyolefin resin such as polypropylene or polyethylene.

8. A method for manufacturing a battery, the method comprising:
enclosing battery components including an electrode assembly inside (5) an inflatable pouch case (1),
wherein the inflatable pouch case (1) has an inner surface (2) facing the battery components and an outer surface (3) opposite to the inner surface (2), and
wherein electrode leads (4) electrically connected to the electrode assembly extend through the inflatable pouch case (1) from the inside (5) of the inflatable pouch case (1) to an outside (5) of the inflatable pouch case (1);
the method being **characterized by**
bonding the outer surface (3) of the inflatable pouch case (1) to a surface of each of the electrode leads (4) of the inflatable pouch case (1).

9. The method according to claim 8, wherein bonding the outer surface (3) of the inflatable pouch case (1) to a surface of each of the electrode leads (4) comprises:
heating the outer surface (3) of the inflatable pouch case and the surfaces of the electrode leads (4); and
pressing the heated outer surface (3) of the inflatable pouch case (1) against the heated surfaces of the electrode leads (4).

10. The method according to claims 8 or 9, wherein bonding the outer surface (3) of the inflatable pouch case (1) to a surface of each of the electrode leads (4) further comprises:
bending, in particular folding, the inflatable pouch case (1) such that the outer surface (3) of the inflatable pouch case (1) faces the surface of at least one of the electrode leads (4);
placing a heat source (11) between the outer surface (3) of the inflatable pouch case and the surface of the electrode lead (4); and
pressing the bent pouch case (1) against the electrode leads (4) such that the outer surface (3) of the inflatable pouch case (1) is bonded to the surface of the electrode lead (4).

11. The method according to any one of the claims 8 to 10, wherein the heating is performed by applying electromagnetic waves, in particular infrared light.

12. The method according to any one of the claims 9 to 11, wherein the pressing is performed for about 2-3 seconds.

13. A battery manufacturing system, the battery manufacturing system being configured to perform the method of any one of claims 8 to 12.
